(19) Europäisches Patentamt
European Patent Office
Office européen des brevets

(11) EP 4 640 363 A1

## (12) EUROPEAN PATENT APPLICATION

(43) Date of publication:
29.10.2025 Bulletin 2025/44

(21) Application number: 25171163.6

(22) Date of filing: 17.04.2025

(51) International Patent Classification (IPC):
B23K 35/00 (2006.01)    B23K 35/02 (2006.01)
B23K 35/30 (2006.01)    C04B 37/02 (2006.01)
C22C 9/02 (2006.01)    H01L 23/00 (2006.01)

(52) Cooperative Patent Classification (CPC):
B23K 35/001; B23K 35/007; B23K 35/025;
B23K 35/302; C04B 37/026; C22C 9/02;
H01L 24/26; C04B 2235/6581; C04B 2235/96;
C04B 2235/963; C04B 2237/124; C04B 2237/126;
C04B 2237/127; C04B 2237/343; C04B 2237/348;
(Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 23.04.2024 KR 20240054290

(71) Applicant: KCC Corporation
Seoul 06608 (KR)

(72) Inventors:
• YU, Myunghan
Gwangju 61975 (KR)
• NAM, Ki-Hyeon
Yangju-si 11455 (KR)
• KWAK, Mansuk
Wanju-gun 55317 (KR)

(74) Representative: Pfenning, Meinig & Partner mbB
Patent- und Rechtsanwälte
Theresienhöhe 11a
80339 München (DE)

## (54) METAL PASTE COMPOSITION AND METAL-CERAMIC COMPOSITE SUBSTRATE COMPRISING THE SAME

(57) The present disclosure relates to a metal paste composition and a metal-ceramic composite substrate comprising the same. The metal paste composition comprises 67 to 83 wt% of copper (Cu), 15 to 32 wt% of tin (Sn), and 0.5 to 1.7 wt% of titanium (Ti) and a ceramic substrate. The metal-ceramic composite substrate comprises a ceramic substrate; a bonding layer formed on the ceramic substrate and composed of the metal paste composition of the present disclosure; and a metal layer formed on the bonding layer.

【Figure 1】

EP 4 640 363 A1

(52) Cooperative Patent Classification (CPC): (Cont.)
C04B 2237/366; C04B 2237/368; C04B 2237/52;
C04B 2237/704; C04B 2237/706; C04B 2237/708

## Description

[Technical Field]

The present disclosure relates to a metal paste composition and a metal-ceramic composite substrate comprising the same.

[Background Art]

As a conventional power module, a substrate manufactured using a direct copper bonding method (DCB) that directly bonds an oxidizable copper circuit to a ceramic substrate such as alumina ($Al_2O_3$) with excellent electrical, mechanical, and heat dissipation properties was used. However, as problems such as increased heat generation accompanying high-density, high-integration, and high-speed devices have been identified, substrates manufactured using the active metal brazing method (hereinafter referred to as "AMB") instead of DCB have recently been attracting attention.

AMB is a method of forming a layer by brazing an active metal onto a ceramic substrate, which has the advantage of superior interlayer bonding strength and long-term reliability compared to substrates manufactured with DCB.

Meanwhile, ceramic substrates used in the AMB comprise aluminum nitride (AlN), silicon nitride ($Si_3N_4$), zirconia ($ZrO_2$), and alumina ($Al_2O_3$), and among them, silicon nitride substrates with excellent strength and thermal conductivity are widely used.

However, since AMB contains silver (Ag) as an essential component during active metal brazing, there is a problem that the manufacturing cost is increased and the physical properties are deteriorated due to the migration of silver (Ag) when high heat is generated.

Therefore, in order to solve these problems, there is a need to develop a metal-ceramic composite substrate that can prevent deterioration of physical properties by excluding the use of silver (Ag) when performing active metal brazing.

[Prior art document]

[Patent document]

(Patent Document 1) Korean Laid-open Patent Publication No. 2018-0052448
(Patent Document 2) Korean Patent Publication No. 10-2220852

[Disclosure]

[Technical Problem]

The present disclosure is intended to solve the above problems, and provides a metal paste composition containing copper, tin (Sn), and titanium (Ti) in a specific content range while excluding the use of silver (Ag) in active metal brazing, and provides a metal-ceramic composite substrate capable of securing reliability in bonding strength and thermal stability between a ceramic substrate and a metal layer by forming a bonding layer using the same.

[Technical Solution]

According to one embodiment, the present disclosure
provides a metal paste composition comprising 67 to 83 wt% of copper (Cu), 15 to 32 wt% of tin (Sn), and 0.5 to 1.7 wt% of titanium (Ti).

The metal paste composition may additionally contain 0.1 wt% to 0.9 wt% nickel (Ni).

According to another embodiment, the present disclosure provides a metal-ceramic composite substrate comprising a ceramic substrate; a bonding layer formed on the ceramic substrate and composed of the metal paste composition of the present disclosure; and a metal layer formed on the bonding layer.

The ceramic substrate may be made of at least one selected from the group consisting of silicon nitride ($Si_3N_4$), aluminum nitride (AlN), zirconia ($ZrO_2$), and alumina ($Al_2O_3$).

[Advantageous Effects]

In the metal-ceramic composite substrate according to the present disclosure, a bonding layer made of a metal paste composition containing copper (Cu) and an active metal having a specific composition, excluding the use of silver (Ag), is formed between the ceramic substrate and the metal layer, thereby enabling uniform bonding over the entire area of the ceramic substrate and the metal layer, ensuring reliability of bonding strength and thermal stability between the ceramic substrate and the metal layer, and also improving the insulation resistance of the ceramic portion after etching.

[Description of Drawings]

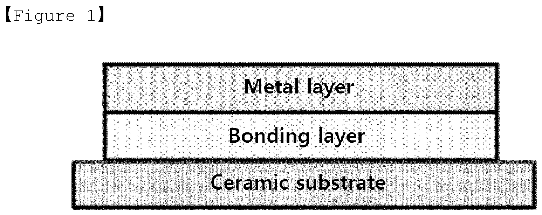

FIG. 1 is a cross-sectional view of a metal-ceramic composite substrate according to one embodiment of the present disclosure.

[Best Mode]

Hereinafter, the present disclosure will be described in more detail.

Meanwhile, the term "includes" used in this specification is an open-ended description that has an equivalent meaning to expressions such as "comprises, " "contains," "has," or "is characterized by", and does not exclude additional elements, materials or processes not listed herein.

The inventors of the present disclosure have conducted repeated studies to develop a metal-ceramic composite substrate that can secure excellent bonding strength between the ceramic substrate and the metal layer, while simultaneously securing reliability for thermal stability and effectively improving the insulation resistance of the ceramic portion after etching. As a result, they have found that the physical properties and thermal safety of the bonding of the metal-ceramic composite substrate can be dramatically improved, by forming a bonding layer between the ceramic substrate and the metal layer, which is composed of a metal paste composition containing copper as a main metal while excluding the use of silver (Ag), containing tin (Sn) and nickel (Ni) for enhancing the bonding properties, and containing titanium (Ti) as an active metal in a specific content range, and have completed the present disclosure.

## Metal paste composition

Specifically, the metal paste composition according to the present disclosure may contain 67 to 83 wt% of copper (Cu), 15 to 32 wt% of tin (Sn), and 0.5 to 1.7 wt% of titanium (Ti).

In addition, the metal paste composition may additionally contain 0.1 wt% to 0.9 wt% of nickel (Ni).

Copper (Cu), which is a main component of the metal paste composition of the present disclosure, is a component that enhances the bonding strength between the ceramic substrate and the metal layer while melting by heat, which can be contained in the metal paste composition in an amount of about 67 wt% to 83 wt%, or 69 wt% to 80 wt%.

That is, the melting point of copper (Cu) is 1,085°C, and the melting point of tin (Sn) is 232°C. Therefore, when the copper (Cu) content exceeds 83 wt%, the content of metals other than copper in the metal paste composition decreases, causing the reaction temperature to rises, so that the reaction may not occur in some areas, and as a result, a non-bonded areas may occur during the manufacturing of the substrate described below. Conversely, if the content of copper (Cu) is less than 67 wt%, as the content of metals other than copper in the metal paste composition increases, the reaction temperature decreases, so that a difference in diffusion of each component may occur, thereby causing voids (kirkendall voids) to be induced inside the bonding layer during the substrate manufacturing process described below, which may reduce the bonding strength.

In addition, tin (Sn) is a component that enhancing the bonding strength between the ceramic substrate and the metal layer, which will be described below, while being melted by heat, and may be contained in the metal paste composition in an amount of about 15 wt% to 32 wt%, specifically 20 wt% to 30 wt%.

If the content of tin (Sn) in the metal paste composition is less than 15 wt%, the reaction temperature increases because the content of Sn, which has a low melting point, is small, which may cause un-reaction in some areas, and thus the bonding area may decrease during the substrate manufacturing process described below. In addition, if the content of tin (Sn) in the metal paste composition exceeds 32 wt%, the reactivity between ceramic and tin increases, so that tin components that act as conductors in the subsequent etching process remain, which may result in a deterioration in the insulation resistance properties.

In addition, titanium, which is one of the components of the metal paste composition, is bonded to the ceramic material through a reaction as shown in Equation (1) below by diffusion, thereby further enhancing the bonding strength between the ceramic substrate and the metal layer during the substrate manufacturing process described below (K.S.Choi, et al, Interface Reactions and Diffusion of Si3N4/Ti and Si3N4/TiAl Alloys, Korean Journal of Materials Research, Vol.27, No.11, pp.603-608).

Equation (1)

$$Si_3N_4 + 10Ti \rightarrow Ti_6Si_3 + 4TiN$$

Titanium (Ti) may be contained in the bonding layer in an amount of less than 2.0 wt%, specifically about 0.5 wt% to 1.7 wt%, specifically about 0.8 wt% to 1.3 wt%.

If the content of titanium (Ti) in the metal paste composition is less than 0.5 wt%, since the amount of reaction of the active metal is insufficient, a non-bonded region may occur and the bonding strength properties may be deteriorated. If the content of titanium (Ti) in the metal paste composition exceeds 1.7 wt%, the process temperature must be increased for the reaction of the active metal, and then if a high process temperature is applied, the etching of the active metal thereafter may become impossible, which may deteriorate the insulation resistance properties.

Meanwhile, the metal paste composition may additionally contain nickel (Ni) as an active metal.

The Nickel (Ni) is a component that enhances the bonding strength of the ceramic substrate and metal layer described below when melted by heat, and can be contained in the metal paste composition in an amount of less than about 1.0 wt%, specifically 0.9 wt% or less, specifically 0.5 wt% or less, specifically 0.1 wt% to 0.9 wt%.

Specifically, if the content of nickel (Ni) in the metal paste composition is 0.9 wt% or less, the bonding strength between the ceramic substrate and the metal layer described below can be secured due to the effect of improving wettability. If the content of nickel (Ni) in the metal paste composition is 1.0 wt% or more, the melting temperature may increase due to an increase in the content of Ni, and the bonding strength and insulation resistance may become significantly inferior due to an increase in reactivity with ceramics.

### Metal-ceramic composite substrate

In addition, the present disclosure may provide a metal-ceramic composite substrate comprising the metal paste composition.

Specifically, the metal-ceramic composite substrate according to the present disclosure comprises:

a ceramic substrate;
a bonding layer formed on the ceramic substrate and composed of the metal paste composition of the present disclosure; and
a metal layer formed on the bonding layer.

Below, FIG. 1 is a cross-sectional view for explaining a metal-ceramic composite substrate according to the present disclosure. Referring to this, the metal-ceramic composite substrate of the present disclosure may include a form in which a ceramic substrate, a bonding layer, and a metal layer are sequentially laminated.

Hereinafter, each component of the metal-ceramic composite substrate of the present disclosure will be described with reference to FIG. 1.

### (1) Ceramic substrate

The ceramic substrate may be formed in a plate shape, and may be specifically made of at least one selected from the group consisting of silicon nitride ($Si_3N_4$), aluminum nitride (AlN), zirconia ($ZrO_2$), and alumina ($Al_2O_3$).

Specifically, the ceramic substrate may be made of silicon nitride ($Si_3N_4$), which has a thermal conductivity of 80 to 90 W/mK, which is superior to that of alumina ($Al_2O_3$), and a mechanical strength (based on flexural strength) of about 800 MPa, which is superior to that of ceramic materials such as alumina ($Al_2O_3$), aluminum nitride (AlN), and zirconia ($ZrO_2$).

In addition, the thickness of the ceramic substrate may be 0.25 mm to 1.0 mm. If the thickness of the ceramic substrate is 0.25 mm or more, the occurrence of cracks, etc. in the ceramic substrate during the process can be suppressed. If the thickness of the ceramic substrate is 1.0 mm or less, the problem of reduced thermal conductivity of the ceramic substrate can be suppressed.

If necessary, the ceramic substrate may be surface treated to remove the surface glass phase so as to enhance bonding strength with the bonding layer or metal layer.

The surface roughness (Ra) of such ceramic substrate may be 0.5 to 1.5 $\mu$m, or may be 0.5 to 1.0 $\mu$m, and specifically may be 0.6 to 0.8 $\mu$m.

The surface roughness (Ra) refers to the degree of fine irregularities occurring on a surface, and specifically, the surface roughness (Ra) refers to arithmetic mean roughness. The arithmetic mean roughness is a center line average and can be calculated (measured) by a commonly known method.

If the surface roughness (Ra) of the above ceramic substrate is less than 0.5 $\mu$m, since the bonding force between the ceramic substrate and the metal layer is decreased and thus a separate additional process for bonding the metal layer is required, there is a problem that the manufacturing cost is increased. If the surface roughness (Ra) exceeds 1.5 $\mu$m, the bonding layer may not be formed uniformly on the ceramic substrate, and thus, there is a risk of occurrence of a non-bonded region, which may result in a decrease in yield.

## (2) Bonding layer

The bonding layer serves to enhance bonding strength between the ceramic substrate and the metal layer, and may be formed on at least one of the upper or lower surfaces of the ceramic substrate, or may be formed on both the upper and lower surfaces of the ceramic substrate.

The bonding layer can be formed of the metal paste composition of the present disclosure.

In this case, the description of the components of the metal paste composition overlaps with the above-mentioned content, so its description is omitted.

Meanwhile, the thickness of the bonding layer may be a thickness measured by observing a cross-section of a ceramic substrate using SEM, etc. before heat treatment, and may be about 10 to 20 $\mu$m.

If the thickness of the bonding layer satisfies the above range, it can sufficiently perform its role as a reaction layer when laminating a subsequent metal layer, thereby securing excellent bonding strength between the ceramic substrate and the metal layer. If the thickness of the bonding layer is 10 $\mu$m or more, a sufficient amount required for bonding with the ceramic can be provided, thereby ensuring an enhancement in bonding strength. If the thickness of the bonding layer is 20 $\mu$m or less, since there is no need to apply a higher process temperature than necessary to melt the bonding layer, the active metal can be prevented from being eluted outside the ceramic/copper at high temperatures. Therefore, it is possible to prevent problems such as reduced bonding strength or reduced insulation resistance.

## (3) Metal layer

The metal layer bonded to the metal-ceramic composite substrate of the present disclosure can be formed on at least one of the upper or lower surfaces of the ceramic substrate, or can be formed on both the upper and lower surfaces of the ceramic substrate.

The metal layer is not particularly limited as long as it is a material that can be applied to the AMB process, and may comprise, for example, copper (Cu).

In addition, the thickness of the metal layer can be 100 to 500 $\mu$m, and a foil form is mainly used.

As described above, the metal-ceramic composite substrate of the present disclosure can have a bonding strength of 10 N/mm or more between the ceramic substrate and the metal layer, and the higher the bonding strength, the more advantageous it is. The ceramic insulation resistance in the metal layer and ceramic substrate can be 10 G$\Omega$ or more, and a higher insulation resistance is advantageous in that it can maintain insulation properties at high voltages.

## Method for manufacturing metal-ceramic composite substrate

The method for manufacturing the metal-ceramic composite substrate according to the present disclosure comprises:

a step of manufacturing a metal paste composition by adding a vehicle to a metal powder formed by mixing copper (Cu), tin (Sn), and titanium (Ti);
a step of forming a bonding layer by applying the metal paste composition to at least one surface of a ceramic substrate; and
a step of laminating a metal layer on the bonding layer,
wherein the metal powder may contain 67 to 83 wt% of copper (Cu), 15 to 32 wt% of tin (Sn), and 0.5 to 1.7 wt% of titanium (Ti).

In addition, the metal powder may additionally contain 0.1 wt% to 0.9 wt% of nickel (Ni).

## (1) Step for manufacturing metal paste composition

In the present disclosure, a metal paste composition can be manufactured by adding a vehicle to a metal powder formed by mixing copper (Cu), tin (Sn), and titanium (Ti).

In this case, the metal powder may contain 67 to 83 wt% of copper (Cu), 15 to 32 wt% of tin (Sn), and 0.5 to 1.7 wt% of titanium (Ti).

In addition, the metal powder may additionally contain nickel (Ni).

In this case, the content of nickel (Ni) can be from 0.1 wt% to 0.9 wt%.

The above metal such as Cu, Sn and Ti may be contained in the form of a metallic element, and may also be added in the form of a hydroxide, if necessary.

Meanwhile, the vehicle may comprise an organic solvent such as $\alpha$-terpineol, toluene, diethylglycol monobutyl ether acetate, methyl cellosolve or ethyl cellosolve, and may additionally comprise a binder such as polymethylmethacrylate(PMMA), methyl cellulose or ethyl cellulose.

The organic solvent and binder can be mixed and used in a weight ratio of 55:45 to 75:25.

In addition, the vehicle may be added so that the solid content is about 65 wt% to 95 wt% with respect to the total weight of the metal paste composition, and preferably, it may be contained so that it is about 80 wt% to 95 wt%.

If the solid content in the metal paste is 65 wt% or more, the bonding strength can be enhanced by securing the solid content in the paste composition and preventing a decrease in density. If the solid content in the metal paste is less than 65 wt%, voids may be induced due to the generation of bubbles during heat treatment by applying a large amount of binder. In addition, if the solid content in the metal paste composition is 95 wt% or less, the printability can be improved by preventing a decrease in the dispersibility and an increase in the viscosity of the paste composition.

### (2) Step of forming bonding layer by applying the metal paste composition to at least one surface of ceramic substrate

In the step of the present disclosure, the manufactured metal paste composition can be applied to at least one surface of a ceramic substrate to form a bonding layer.

The ceramic substrate can be surface treated by a process such as etching so as to enhance bonding strength with a subsequent bonding layer or metal layer.

The surface roughness (Ra) of the surface-treated ceramic substrate may be 0.5 to 1.5 $\mu$m, or may be 0.5 to 1.0 $\mu$m, and specifically may be 0.6 to 0.8 $\mu$m.

In addition, the application is not particularly limited as long as it is applicable to brazing in the AMB process, and can be performed by methods, for example, screen printing and the like.

Specifically, the application may include a step of applying the metal paste composition to a thickness of 10 to 20 $\mu$m using a method such as screen printing, and then drying at 110°C to 130°C for 1 to 20 minutes to remove the vehicle, and then heat treating at a temperature of 200°C to 400°C for less than 30 minutes, specifically, for 10 minutes.

Meanwhile, the thickness of the bonding layer may be a thickness measured before the formation of the metal layer, or a thickness measured by observing the cross-section of the ceramic substrate using SEM, etc.

The thickness of this bonding layer can be appropriately controlled by adjusting the size of the mesh used during the printing.

### (3) Step of laminating metal layer on bonding layer

In addition, the method of the present disclosure may include a step of laminating a metal layer on the bonding layer and then performing heat treatment.

The metal layer is not particularly limited as long as it is a material that can be applied to the AMB process, and may include, for example, copper (Cu), and specifically, may be a copper thin film.

The thickness of the metal layer can be 100 to 500 $\mu$m.

In addition, the heat treatment can be performed at a temperature lower than the eutectic melting point of copper or the active metal, at a temperature of 900°C to 1050°C, preferably 950°C to 1020°C, under vacuum conditions of 1 torr or less, or $1 \times 10^{-3}$ to 0.1 torr. If the pressure during the lamination exceeds the above range, i.e., if the vacuum level is low, a problem of void defects may occur. In addition, if the temperature during the lamination is less than the above range, a problem of non-bonding may occur, and if it exceeds the above range, a decrease in bonding strength and problems related to the appearance of the copper surface may occur.

### (4) Step of forming pattern

Meanwhile, the method for manufacturing the metal-ceramic composite substrate of the present disclosure may additionally include a step of forming a pattern as a subsequent step after manufacturing the ceramic substrate by laminating a metal layer on a bonding layer as described above.

The step of forming the pattern includes implementing exposed/unexposed portions on the metal layer through screen printing or lamination/exposure processes, and then applying the DES process to the product on which the pattern has been implemented to selectively etch the metal layer (copper), thereby forming a metal layer (copper) pattern.

In addition, the method for manufacturing a metal-ceramic composite substrate of the present disclosure may additionally perform a step of removing active metal remaining on the ceramic substrate after the step of forming the pattern.

As described above, the metal-ceramic composite substrate manufactured by the method for manufacturing the metal-ceramic composite substrate of the present disclosure can secure excellent bonding strength between the ceramic substrate and the metal layer by adopting a bonding layer of a specific metal composition excluding silver (Ag) between the ceramic substrate and the metal layer, and has the advantage of not causing cracks or peeling even in a thermal cycle test that repeats heating and cooling, and has enhanced thermal characteristics, thereby providing electronic components with excellent reliability even in harsh environments (especially high temperature and high voltage). These electronic components can comprise products that have electronic circuits, such as semiconductors, elements, and transistors, as well as electronic products such as computers, cell phones, and TVs.

Hereinafter, the present disclosure will be described more specifically through examples.

However, these examples are only intended to help understand the present disclosure and the scope of the present disclosure is not limited to these examples in any way.

**[Examples]**

**Example 1.**

(Manufacture of metal paste composition)

A metal paste composition (solid content: 85 wt%) was prepared by adding $\alpha$-terpineol and diethylglycol monobutyl ether acetate to a metal powder formed by mixing 79 wt% of copper (Cu), 20 wt% of tin (Sn), and 1.0 wt% of titanium (Ti).

(Manufacture of metal-ceramic composite substrate)

Then, the metal paste composition was applied to one surface of an aluminum nitride ceramic substrate, dried at 120°C for 10 minutes, and then fired at 300°C for 10 minutes to form a bonding layer (thickness, 15 $\mu$m).

Then, copper with a thickness of 300 $\mu$m was laminated on the bonding layer, and the manufactured laminate was bonded by placing it in a vacuum furnace at a temperature of 1,000°C and a vacuum of 0.1 torr or less, thereby manufacturing a metal-ceramic composite substrate.

**Example 2.**

(Manufacture of metal paste composition)

A metal paste composition (solid content: 85 wt%) was prepared by adding $\alpha$-terpineol and diethylglycol monobutyl ether acetate to a metal powder formed by mixing 69 wt% of copper (Cu), 30 wt% of tin (Sn), and 1.0 wt% of titanium (Ti).

(Manufacture of metal-ceramic composite substrate)

A metal-ceramic composite substrate was manufactured in the same manner as in Example 1, except that the manufactured metal paste composition was used instead of the metal paste composition of Example 1.

**Example 3.**

(Manufacture of metal paste composition)

A metal paste composition (solid content: 85 wt%) was prepared by adding $\alpha$-terpineol and diethylglycol monobutyl ether acetate to a metal powder formed by mixing 79 wt% of copper (Cu), 19.5 wt% of tin (Sn), 0.5 wt% of nickel (Ni), and 1.0 wt% of titanium (Ti).

(Manufacture of metal-ceramic composite substrate)

A metal-ceramic composite substrate was manufactured in the same manner as in Example 1, except that the manufactured metal paste composition was used instead of the metal paste composition of Example 1.

**Example 4.**

(Manufacture of metal paste composition)

A metal paste composition (solid content: 85 wt%) was prepared by adding α-terpineol and diethylglycol monobutyl ether acetate to a metal powder formed by mixing 78.5 wt% of copper (Cu), 19.5 wt% of tin (Sn), 1.0 wt% of nickel (Ni), and 1.0 wt% of titanium (Ti).

(Manufacture of metal-ceramic composite substrate)

A metal-ceramic composite substrate was manufactured in the same manner as in Example 1, except that the manufactured metal paste composition was used instead of the metal paste composition of Example 1.

**Comparative Example 1.**

(Manufacture of metal paste composition)

A metal paste composition (solid content: 85 wt%) was prepared by adding α-terpineol and diethylglycol monobutyl ether acetate to a metal powder formed by mixing 79.1 wt% of copper (Cu), 20 wt% of tin (Sn), and 0.9 wt% of nickel (Ni).

(Manufacture of metal-ceramic composite substrate)

A metal-ceramic composite substrate was manufactured in the same manner as in Example 1, except that the manufactured metal paste composition was used instead of the metal paste composition of Example 1.

**Comparative Example 2.**

(Manufacture of metal paste composition)

A metal paste composition (solid content: 85 wt%) was prepared by adding α-terpineol and diethylglycol monobutyl ether acetate to a metal powder formed by mixing 68 wt% of copper (Cu), 30 wt% of tin (Sn), and 2.0 wt% of titanium (Ti).

(Manufacture of metal-ceramic composite substrate)

A metal-ceramic composite substrate was manufactured in the same manner as in Example 1, except that the manufactured metal paste composition was used instead of the metal paste composition of Example 1.

**Comparative Example 3.**

(Manufacture of metal paste composition)

A metal paste composition (solid content: 85 wt%) was prepared by adding α-terpineol and diethylglycol monobutyl ether acetate to a metal powder formed by mixing 69.6 wt% of copper (Cu), 30 wt% of tin (Sn), and 0.4 wt% of titanium (Ti).

(Manufacture of metal-ceramic composite substrate)

A metal-ceramic composite substrate was manufactured in the same manner as in Example 1, except that the manufactured metal paste composition was used instead of the metal paste composition of Example 1.

**Comparative Example 4.**

(Manufacture of metal paste composition)

A metal paste composition (solid content: 85 wt%) was prepared by adding α-terpineol and diethylglycol monobutyl ether acetate to a metal powder formed by mixing 79 wt% of copper (Cu), 19.5 wt% of silver (Ag), 0.5 wt% of nickel (Ni), and 1.0 wt% of titanium (Ti).

(Manufacture of metal-ceramic composite substrate)

A metal-ceramic composite substrate was manufactured in the same manner as in Example 1, except that the manufactured metal paste composition was used instead of the metal paste composition of Example 1.

**Comparative Example 5.**

(Manufacture of metal paste composition)

A metal paste composition (solid content: 85 wt%) was prepared by adding $\alpha$-terpineol and diethylglycol monobutyl ether acetate to a metal powder formed by mixing 79 wt% of copper (Cu), 19.5 wt% of manganese (Mn), 0.5 wt% of nickel (Ni), and 1.0 wt% of titanium (Ti).

(Manufacture of metal-ceramic composite substrate)

A metal-ceramic composite substrate was manufactured in the same manner as in Example 1, except that the manufactured metal paste composition was used instead of the metal paste composition of Example 1.

**[Experimental Examples]**

**Experimental Example 1.**

The physical properties of ceramic substrates manufactured in the Examples and Comparative Examples were evaluated using the following method, and the results are shown in Table 1.

**(1) Bonding rate**

For the metal-ceramic composite substrates manufactured in Examples 1 to 4 and the metal-ceramic composite substrates manufactured in Comparative Examples 1 to 5, the void-free area was measured relative to the total area and expressed by %.

**(2) Evaluation of bonding strength**

The metal-ceramic composite substrates manufactured in Examples 1 to 4 and the metal-ceramic composite substrates manufactured in Comparative Examples 1 to 5 were mounted on a universal testing machine (UTM), and the bonding strength between the metal layer and the ceramic layer was measured. Specifically, the bonding strength between the metal layer and the ceramic layer was measured at a peeling speed of 50 mm/min.

**(3) Evaluation of heat resistance**

In order to evaluate the heat resistance of the metal-ceramic composite substrates manufactured in Examples 1 to 4 and the metal-ceramic composite substrates manufactured in Comparative Examples 1 to 5, a thermal fatigue test was performed using a thermal impact tester (TCT, TSA-71L) by measuring the number of cycles during which the substrate was not damaged during a total of 600 cycles, with one cycle being -45°C for 15 minutes and then 125°C for 15 minutes.

**(4) Evaluation of insulation resistance**

Patterns were implemented on the metal-ceramic composite substrates manufactured in Examples 1 to 4 and the metal-ceramic composite substrates manufactured in Comparative Examples 1 to 5, and the resistance value generated by applying a high voltage (500 V) to the ceramic portion for 5 seconds was confirmed.

**(5) Evaluation of solderability**

Solder was placed on the metal-ceramic composite substrates manufactured in Examples 1 to 4 and the metal-ceramic composite substrates manufactured in Comparative Examples 1 to 5, reflow suitable for the solder was applied, and the spreadability of the solder was observed.

[Table 1]

|  | Bonding rate (%) | Bonding strength | TCT (cycle) | Insulation Resistance (GΩ) | Solderability |
|---|---|---|---|---|---|
| Example 1 | 100 | 15.9 | 600 | 212 | 100% |
| Example 2 | 100 | 13.4 | 600 | 201 | 100% |
| Example 3 | 100 | 11.3 | 600 | 152 | 100% |
| Example 4 | 100 | 7.7 | 600 | 141 | 100% |
| Comparative Example 1 | 0 | - | - | - | - |
| Comparative Example 2 | 90 | 5.1 | 250 | 3 | 100% |
| Comparative Example 3 | 100 | 3.8 | 600 | 196 | 100% |
| Comparative Example 4 | 90 | 2.0 | 600 | 202 | 100% |
| Comparative Example 5 | 90 | 5.7 | 600 | 2 | 100% |

Referring to Table 1 above, in the case of the metal-ceramic composite substrates of Comparative Examples 2 and 5, it can be seen that the bonding ratio (%), bonding strength, and insulation resistance are significantly inferior compared to the metal-ceramic composite substrates of Examples 1 to 4. In the case of the metal-ceramic composite substrates of Comparative Examples 3 and 4, it can be seen that the heat resistance, insulation resistance, and solderability evaluations are at the same level as those of the metal-ceramic composite substrates of Examples 1 to 4, but the bonding strength is significantly inferior.

Meanwhile, in the case of the metal-ceramic composite substrate of Comparative Example 1, it can be seen that the bonding rate and bonding strength are significantly inferior to those of the metal-ceramic composite substrates of Examples 1 to 4. Meanwhile, in the case of the metal-ceramic composite substrate of Comparative Example 1, the bonding rate and bonding strength are significantly low, making subsequent processes impossible, and therefore, TCT, insulation resistance, and solderability characteristics were not evaluated.

## Claims

1.    A metal paste composition comprising 67 to 83 wt% of copper (Cu), 15 to 32 wt% of tin (Sn), and 0.5 to 1.7 wt% of titanium (Ti).

2.    The metal paste composition according to claim 1, wherein the metal paste composition further contains nickel (Ni).

3.    The metal paste composition according to claim 2, wherein the content of nickel (Ni) is 0.1 wt% to 0.9 wt%.

4.    A metal-ceramic composite substrate, comprising:

   a ceramic substrate;
   a bonding layer formed on the ceramic substrate and composed of the metal paste composition of claim 1; and
   a metal layer formed on the bonding layer.

5.    The metal-ceramic composite substrate according to claim 4, wherein the ceramic substrate is made of at least one selected from the group consisting of silicon nitride ($Si_3N_4$), aluminum nitride (AlN), zirconia ($ZrO_2$), and alumina ($Al_2O_3$).

【Figure 1】

Europäisches
Patentamt

European
Patent Office

Office européen
des brevets

# EUROPEAN SEARCH REPORT

**Application Number**

EP 25 17 1163

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2017 114893 A1 (ROGERS GERMANY GMBH [DE]) 10 January 2019 (2019-01-10) | 1,2,4,5 | INV.<br>B23K35/00 |
| A | * the whole document * | 3 | B23K35/02<br>B23K35/30 |
| | ----- | | C04B37/02 |
| X | EP 0 492 435 A1 (UCAR CARBON TECH [US]) 1 July 1992 (1992-07-01) * the whole document * | 1,2 | C22C9/02<br>H01L23/00 |
| | ----- | | |
| A | US 2016/016245 A1 (TERASAKI NOBUYUKI [JP] ET AL) 21 January 2016 (2016-01-21) * the whole document * | 1-5 | |
| | ----- | | |

**TECHNICAL FIELDS SEARCHED (IPC)**

B23K
C04B
C22C
H01L

The present search report has been drawn up for all claims

| Place of search | Date of completion of the search | Examiner |
|---|---|---|
| The Hague | 29 August 2025 | Stocker, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 1163

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2025

| Patent document cited in search report | Publication date | Patent family member(s) | | Publication date |
|---|---|---|---|---|
| DE 102017114893 A1 | 10-01-2019 | CN | 110891733 A | 17-03-2020 |
| | | DE | 102017114893 A1 | 10-01-2019 |
| | | EP | 3609647 A1 | 19-02-2020 |
| | | JP | 7093796 B2 | 30-06-2022 |
| | | JP | 2020527461 A | 10-09-2020 |
| | | KR | 20200027529 A | 12-03-2020 |
| | | US | 2020384579 A1 | 10-12-2020 |
| | | WO | 2019008003 A1 | 10-01-2019 |
| EP 0492435 A1 | 01-07-1992 | EP | 0492435 A1 | 01-07-1992 |
| | | JP | H04293743 A | 19-10-1992 |
| | | US | 5102621 A | 07-04-1992 |
| US 2016016245 A1 | 21-01-2016 | CN | 105027277 A | 04-11-2015 |
| | | EP | 2978018 A1 | 27-01-2016 |
| | | JP | 6111764 B2 | 12-04-2017 |
| | | JP | 2014183119 A | 29-09-2014 |
| | | KR | 20150133191 A | 27-11-2015 |
| | | TW | 201508871 A | 01-03-2015 |
| | | US | 2016016245 A1 | 21-01-2016 |
| | | WO | 2014148420 A1 | 25-09-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20180052448

- KR 102220852

**Non-patent literature cited in the description**

- **K.S.CHOI et al.** Interface Reactions and Diffusion of Si3N4/Ti and Si3N4/TiAl Alloys. *Korean Journal of Materials Research*, vol. 27 (11), 603-608